**Europäisches Patentamt**

**European Patent Office**

**Office européen des brevets**

(19)

(11) Veröffentlichungsnummer: **0 062 850**

**A1**

(12) # EUROPÄISCHE PATENTANMELDUNG

(21) Anmeldenummer: **82102783.6**

(22) Anmeldetag: **01.04.82**

(51) Int. Cl.³: **H 02 P 1/28**

(30) Priorität: **14.04.81 DE 3115097**

(43) Veröffentlichungstag der Anmeldung:
**20.10.82 Patentblatt 82/42**

(84) Benannte Vertragsstaaten:
**BE FR GB SE**

(71) Anmelder: **SIEMENS AKTIENGESELLSCHAFT Berlin und München**
**Postfach 22 02 61**
**D-8000 München 22(DE)**

(72) Erfinder: **Meintrup, Walter, Dipl.-Ing.**
**Am Vogelherd 129**
**D-8520 Erlangen(DE)**

(54) **Eisendrossel mit Luftspalt zum Anlassen eines ein- oder mehrphasigen Kurzschlussläufermotors mit kleinem Anfahrmoment.**

(57) Zur Erzielung einer gewünschten Momentkennlinie während des Anlaufes eines Kurzschlußläufermotors ist es kebannt, eine Eisendrossel mit Luftspalt und zwei Wicklungen einzusetzen, von denen die eine in Reihe mit dem Motor liegt und die andere an einem Wechselstromsteller angeschlossen ist. Für den Anlauf eines Motors mit besonders kleinem Anfahrmoment, beispielsweise als Antrieb von aufwärtsfördernden, leer anlaufenden Transportbändern, wird die Eisendrossel gemäß der Erfindung mit einem dreischenkligen Eisenkern (7) ausgeführt, auf dessen mittlerem Schenkel die Primärwicklung (2) und auf dessen Außenschenkel je eine Sekundärwicklung (11 bzw. 12) angeordnet ist. Die Sekundärwicklung (11) ist in bekannter Weise an einem Wechselstromsteller (13), die zusätzliche Sekundärwicklung (12) an einem Schaltgerät (14) angeschlossen, das die Wicklung nach Hochlauf des Motors kurzschließt.

EP 0 062 850 A1

SIEMENS AKTIENGESELLSCHAFT
Berlin und München

Unser Zeichen
VPA 81 P 3 0 5 3 E

0062850

## Eisendrossel mit Luftspalt zum Anlassen eines ein- oder mehrphasigen Kurzschlußläufermotors mit kleinem Anfahrmoment

Die Erfindung betrifft eine Eisendrossel mit Luftspalt zum Anlassen eines ein- oder mehrphasigen Kurzschlußläufermotors mit kleinem Anfahrmoment, mit einer in mindestens einer Phase angeordneten Primärwicklung und mindestens einer an einem Wechselstromsteller angeschlossenen Sekundärwicklung.

Aus der DE-PS 26 26 096 ist eine solche Eisendrossel mit einstellbarer Reaktanz bekannt.

In manchen Anwendungsfällen, beispielsweise in Bandtransportanlagen mit aufwärtsfördernden, leer anlaufenden Bändern, bei gegen den geschlossenen Schieber anlaufenden Gebläsen und Kompressoren, liegen infolge des großen Verhältnisses von Leerlaufmoment zu Nennmoment besonders ungünstige Anlaufbedingungen vor. Die infolgedessen zur Erzielung des kleinen Anfahrmomentes benötigte größere Spannungsabsenkung an der Drossel erfordert eine Erhöhung der primärseitigen Reaktanz und damit eine Vergrößerung der Drossel und eine höhere Belastbarkeit des sekundärseitigen Wechselstromstellers.

Der Erfindung liegt daher die Aufgabe zugrunde, die Leistung des Wechselstromstellers möglichst gering zu halten, ohne daß die Wirkungsweise der Drossel beeinträchtigt wird. Gemäß der Erfindung wird diese Aufgabe dadurch gelöst, daß eine zweite, mittels eines Schalt-

Hk 2 Ts / 09.04.1981

gerätes kurzschließbare Sekundärwicklung vorgesehen ist
und daß die erste und zweite Sekundärwicklung auf je
einem der Außenschenkel des dreischenklig ausgeführten
Eisenkerns der Drossel angeordnet sind, während der
mittlere Schenkel die Primärwicklung trägt. Dadurch werden die sich in den Sekundärwicklungen einstellenden
Ströme während eines Anlaufs des Motors in einen linear
vom jeweiligen Anlaufstrom abhängigen Festanteil und
einen mit Hilfe des Wechselstromstellers einstellbaren
variablen Anteil aufgeteilt. Der Wechselstromsteller
ist also nur entsprechend diesem Anteil zu bemessen. Die
Anzahl der Wicklungen der Primärwicklung und der Eisenquerschnitt der Drossel richtet sich wie bei der bekannten Eisendrossel mit einer Sekundärwicklung nach dem
erforderlichen Spannungsabfall der Drossel.

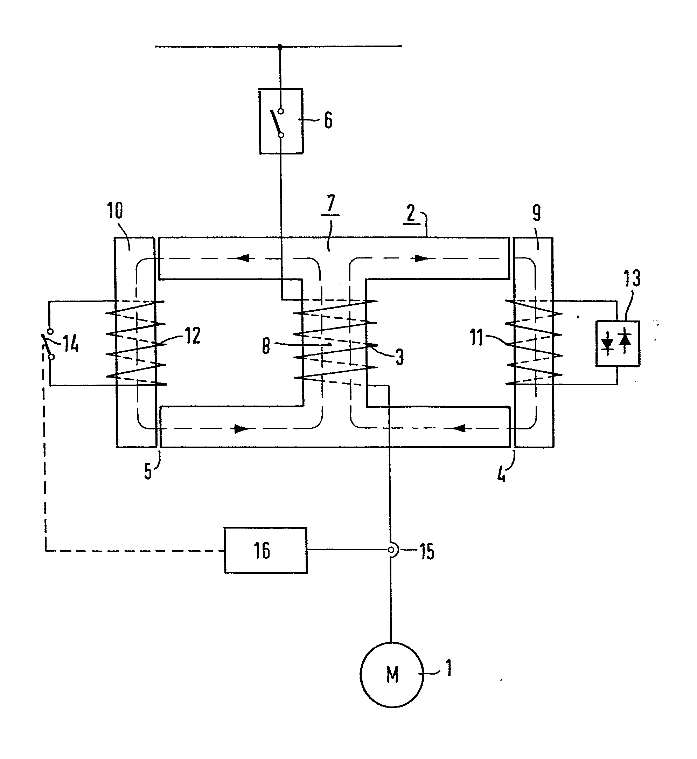

Anhand eines in der Zeichnung dargestellten Ausführungsbeispieles wird die Erfindung im folgenden näher erläutert.

Ein Motor 1 ist über die Primärwicklung 3 einer Eisendrossel 2 mit einstellbarem Luftspalt 4 und 5 und über
einen Leistungsschalter 6 an ein Netz angeschlossen.
Die Drossel ist mit einem dreischenkeligen Eisenkern 7
ausgestattet, dessen Mittelschenkel 8 die Primärwicklung und dessen Außenschenkel 9 und 10 je eine Sekundärwicklung 11 bzw. 12 trägt. An der Sekundärwicklung 11
ist ein Wechselstromsteller 13 und an der Sekundärwicklung 12 ein Schaltgerät 14 angeschlossen. Während des
Anlaufes des Motors sind beide Sekundärwicklungen offen,
so daß an der Drossel der erforderliche, der Bemessung
der Windungszahl und des Eisenquerschnittes entsprechende
größte Spannungsabfall entsteht. Dieser Spannungsabfall
ist von der Größe desjenigen Flusses in der Primärwicklung abhängig, der gleich der Summe aus den in den Sekundärwicklungen erzeugten, über die Luftspalte gelangenden
Flüssen ist. Dieser Fluß in der Primärwicklung ist durch Wahl der Luftspaltgrößen einstellbar und besteht während der Anlaufphase aus einem von der Sekundärwicklung 12 gelieferten Festanteil und einem in der Sekundärwicklung 11 erzeugten, mittels des Wechselstromstellers 13 einstellbaren variablen Anteil.

Vorteilhafterweise bleibt die Sekundärwicklung 12 während des gesamten Anlaufvorganges offen, so daß der zur Anpassung an einen konstanten Anlaufstrom oder an ein konstantes Anfahrmoment erforderliche variable Anteil des Flusses von der gesteuerten Sekundärwicklung 11 übernommen wird. Ist der Anlaufvorgang beendet, werden beide Sekundärwicklungen kurzgeschlossen. Damit erhält der Motor seine volle Nennspannung.

Der Zeitpunkt für das Kurzschließen der Sekundärwicklung 12 läßt sich beispielsweise durch ein den Anlaufstrom des Motors überwachendes Gerät 16 ermitteln, das an einen ohnehin zur Erfassung des Stromes vorgesehenen Stromwandler 15 angeschlossen ist. Natürlich kann auch eine andere für den Nennbetrieb charakteristische Größe, z.B. die Drehzahl zur Ermittlung dieses Zeitpunktes ausgewertet werden.

Die vorstehenden Ausführungen gelten in analoger Weise für einen Drehstrommotor, der über eine Drehstromdrossel mit zwei Sekundärwicklungen je Phase oder über eine Einphasendrossel in einer oder in jeder Phase an das Netz angeschlossen ist.

2 Patentansprüche
1 Figur

Patentansprüche

1. Eisendrossel mit Luftspalt zum Anlassen eines ein- oder mehrphasigen Kurzschlußläufermotors mit kleinem Anfahrmoment, mit einer in mindestens einer Phase angeordneten Primärwicklung und mindestens einer an einen Wechselstromsteller angeschlossenen Sekundärwicklung, d a d u r c h   g e k e n n z e i c h n e t , daß eine zweite, mittels eines Schaltgerätes (14) kurzschließbare Sekundärwicklung (12) vorgesehen ist und daß die erste und zweite Sekundärwicklung (11, 12) auf je einem der Außenschenkel (9 bzw. 10) eines dreischenklig ausgeführten Eisenkerns (7) der Drossel angeordnet sind, während der mittlere Schenkel (8) die Primärwicklung (2) trägt.

2. Eisendrossel nach Anspruch 1, d a d u r c h   g e - k e n n z e i c h n e t , daß ein den Anlaufstrom des Motors überwachendes Gerät (16) vorgesehen ist, das die Sekundärwicklungen zu dem Zeitpunkt kurzschließt, in dem der Nennstrom erreicht ist.

Europäisches Patentamt

## EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | DE-A-1 961 525 (KAWABET; KAWABE, Y.) * Seite 11, Zeile 15 - Seite 14, Zeile 5; Figuren 2,3 * | 1 | H 02 P 1/28 |
| | --- | | |
| A | GB-A-1 097 427 (KAWABE T.) * Seite 3, Zeile 112 - Seite 4, Zeile 6; Figuren 7,8 * | 2 | |
| | --- | | |
| A | DE-A-2 634 899 (ANTOLEK ZVONIMIR) | 1 | |
| | --- | | |
| A | GB-A-1 353 012 (HIRST ELECTRIC INDUSTRIES REGULATORS) | 1 | |
| | ----- | | |

RECHERCHIERTE SACHGEBIETE (Int. Cl. 3)

H 02 P 1/00
H 01 F 31/00

Der vorliegende Recherchenbericht wurde für alle Patentansprüche erstellt.

| Recherchenort DEN HAAG | Abschlußdatum der Recherche 09-07-1982 | Prüfer WEIHS J.A. |
|---|---|---|